Europäisches Patentamt

European Patent Office

Office européen des brevets

(11) Veröffentlichungsnummer: **0 474 912 A1**

# EUROPÄISCHE PATENTANMELDUNG

(21) Anmeldenummer: **90117729.5**

(22) Anmeldetag: **14.09.90**

(51) Int. Cl.5: **H02K 15/08**

(43) Veröffentlichungstag der Anmeldung:
**18.03.92 Patentblatt 92/12**

(84) Benannte Vertragsstaaten:
**AT BE CH DE DK ES FR GB GR IT LI LU NL SE**

(71) Anmelder: **ZIHLMANN WICKELTECHNIK AG**
**Landstrasse 2**
**CH-8116 Würenlos(CH)**

(72) Erfinder: **Dobler, Roland**
**Sonnenbergstrasse 46**
**CH-8134 Adliswil(CH)**

(74) Vertreter: **Breiter, Heinz et al**
**Patentanwalt H. Breiter AG**
**Schaffhauserstrasse 27 Postfach 1163**
**CH-8401 Winterthur(CH)**

(54) **Vorrichtung zur Herstellung eines bewickelten Körpers.**

(57) Die Wickelvorrichtung dient insbesondere der Herstellung von Statoren elektrischer Maschinen. Sie weist eine Halterung (2) zum Befestigen des Statorkörpers (1) auf sowie eine oszillierende Linear- und Drehbewegungen ausführende Drahtführungsvorrichtung (7), zum Bewickeln des Statorkörpers (1) mit Draht (3, 4), einen auf die Drahtführungsvorrichtung (7) wirkenden Antrieb (8), eine Vorratsspule (5, 6) für den Draht (3, 4) und eine zwischen Spule und Halterung angeordnete Drahtbremse (14, 15), welche den Draht (3, 4) mit konstanter Reibungskraft beaufschlagt.

Diese Wickelvorrichtung soll einfach ausgeführt sein und sich auch bei hohen Wickelgeschwindigkeiten durch eine geringe Spannungsbelastung des Drahtes (3, 4) auszeichnen.

Dies wird dadurch erreicht, dass die Drahtbremse (14, 15) beweglich angeordnet ist und beim Bewickeln des Statorkörpers (1) eine synchron zur Bewegung der Drahtführungsvorrichtung (7) erfolgende Bewegung ausführt.

FIG.1

Rank Xerox (UK) Business Services

## TECHNISCHES GEBIET

Bei der Erfindung wird ausgegangen von einer Vorrichtung zur Herstellung eines bewickelten Körpers nach dem Oberbegriff von Patentanspruch 1. Diese Vorrichtung dient bevorzugt zum Aufbringen von Drahtwicklungen auf die Statorblechpakete elektrischer Maschinen. Hierbei werden beim Bewickeln der Statorblechpakete kleiner elektrischer Maschinen dünne Wickeldrähte von beispielsweise 0,3 - 1,2 mm Dicke eingesetzt. Die diese Drähte verarbeitende Wickelmaschine führt oszillierende Linear- und Drehbewegungen mit Frequenzen von bis zu 1500 Hüben und Drehungen pro Minute aus. Zugleich werden auf die Drähte erhebliche Zugkräfte ausgeübt, um so möglichst kompakte Wicklungen zu erzielen. Solche Zugkräfte werden durch eine zwischen einer Drahtvorratsrolle und der Statorwickelmaschine stationär angeordnete Drahtbremse mit konstanter Reibungskraft erreicht sowie auch dadurch, dass die Drähte mehrfach umgelenkt werden. Durch den Bewegungsablauf der oszillierende Linear- und Drehbewegungen hoher Frequenz ausführenden Wickelmaschine und die stationäre Anordnung der Bremselemente kommt es in einzelnen Phasen des Wickelvorganges, wie etwa bei der Umkehr einer Linear- oder Drehbewegung zu drahtspannungslosen Zuständen zwischen den Bremselementen und der Wickelmaschine, was beim Wickeln mit dünnem Draht und mit hoher Wickelgeschwindigkeit zu losen Drahtschlaufen und zum Drahtriss führen kann.

## STAND DER TECHNIK

Aus EP-A-294 978 ist eine als Statorwickelmaschine ausgeführte Vorrichtung nach dem Oberbegriff von Patentanspruch 1 bekannt, bei der neben einer stationären Drahtbremse mit konstanter Reibungskraft noch ein an einer Drahtführungsvorrichtung der Wickelmaschine befestigtes Reibungselement vorgesehen ist. Dieses Reibungselement weist eine konvexe Oberfläche auf, auf welcher der in die Drahtführungsvorrichtung geleitete Draht am Ende jedes Vorwärtshubes der Drahtführungsvorrichtung reibschlüssig aufgelegt wird. Durch diese Massnahmen werden einerseits Schleifenbildung beim Wickeln vermieden und somit eine kompakte Wicklung erzielt und andererseits die Gefahr eines Drahtbruches wesentlich verringert. Diese Vorrichtung benötigt zwei hintereinandergeschaltete Drahtbremsen. Da sie lediglich am Ende des Vorwärtshubes der Drahtführungsvorrichtung zusätzliche Bremswirkung entfaltet, sind gegebenenfalls unerwünschte Betriebszustände micht auszuschliessen.

## DARSTELLUNG DER ERFINDUNG

Der Erfindung, wie sie im Patentanspruch 1 definiert ist, liegt die Aufgabe zugrunde, eine Vorrichtung zur Herstellung eines bewickelten Körpers, insbesondere eines Stators einer elektrischen Maschine anzugeben, bei der trotz einfachen Aufbaus selbst bei hohen Wickelgeschwindigkeiten stets eine geringe Spannungsbelastung des Wickeldrahtes gewährleistet ist. Die erfindungsgemässe Vorrichtung zeichnet sich dadurch aus, dass die Belastung des Drahtes selbst bei hohen Wickelgeschwindigkeiten trotz Verwendung nur einer Drahtbremse durchweg gering gehalten werden kann. Dies ist dadurch bedingt, dass durch die synchron zur Bewegung der Drahtführungvorrichtung erfolgende Bewegung der Drahtbremse spannungslose Zustände zwischen Drahtvorrat und Drahtführungsvorrichtung sich in allen Wicklungsphasen nicht bis zu den Wicklungen auswirken können. Die Wicklungen sind daher selbst bei hohen Wickelgeschwindigkeiten kompakt ausgebildet. Drahtrisse treten selbst bei der Verwendung inhomogen ausgebildeten Wickeldrahtes mit herstellungsbedingten Schwachstellen kaum mehr auf. Dies vor allem auch deswegen, da zugspannungserhöhende Umlenkstellen in der Drahtzuführung weitgehend entfallen, und da die zugspannungsbedingte Dehnung des Drahtes wegen der grossen Nähe der Drahtbremse zur Wicklung vergleichsweise gering ist.

## WEG ZUR AUSFÜHRUNG DER ERFINDUNG

Die Erfindung wird nachfolgend anhand von Zeichnungen näher erläutert. Hierbei zeigt:

Fig. 1 eine Prinzipdarstellung einer als Statorwickelmaschine ausgebildeten Vorrichtung nach der Erfindung,

Fig. 2 eine Aufsicht auf einen Schnitt, welcher in Achsrichtung eines Rohrstückes einer Drahtführungsvorrichtung und einer daran befestigten Drahtbremse der Statorwickelmaschine nach Fig. 1 geführt ist, und

Fig. 3 eine Aufsicht auf einen längs III-III geführten Schnitt durch die Drahtbremse gemäss Fig. 2.

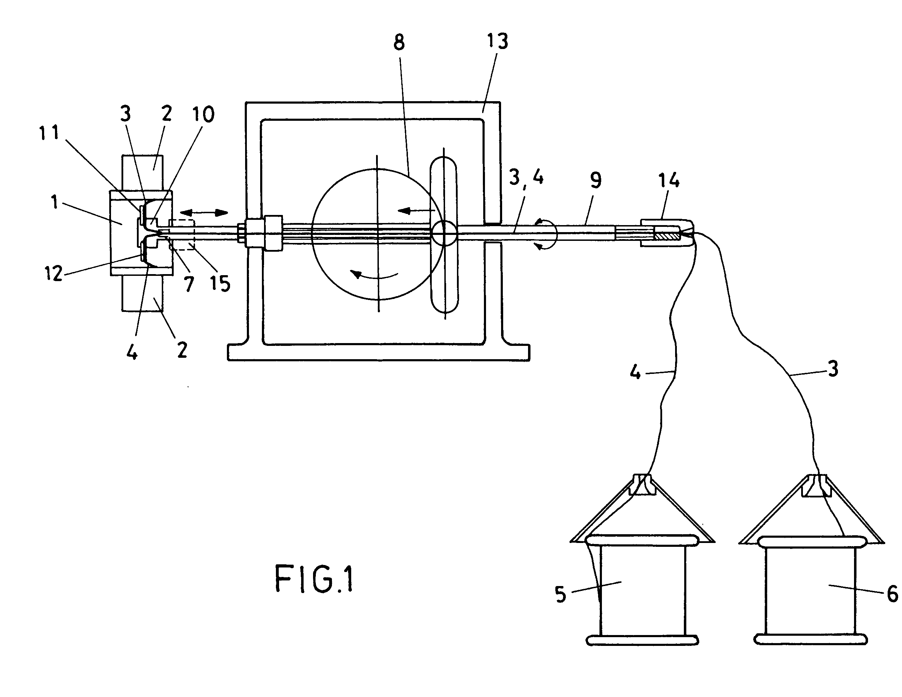

Bei der in Fig. 1 dargestellten Statorwickelmaschine sind die Blechpakete des Stators einer elektrischen Maschine als zu bewickelnder Körper 1 in einer etwa als Befestigungszange ausgebildeten Halterung 2 fixiert. Die Blechpakete werden mit zwei Drähten 3 und 4 bewickelt, welche jeweils von einer von zwei Vorratsspulen 5, 6 abgenommen und über eine Drahtführungsvorrichtung 7 zugeführt werden. Die Drahtführungsvorrichtung 7 wird von einem oszillierende Linear- und Drehbewegungen erzeugenden Antrieb 8 betätigt und weist im wesentlichen ein die beiden Drähte 3, 4 führendes, geradlinig erstrecktes Rohr 9 auf sowie einen an dessen der Halterung 2 zugewandten Ende aufgebrachten Drahtführungskopf 10 mit zwei gegenläufig nach aussen erstreckten Drahtführungsdüsen 11, 12.

Der Antrieb 8 wirkt in bekannter Weise im Inneren eines Gehäuses 13 auf das durch das Gehäuse 13 geführte Rohr 9. Beim Bewickeln des Körpers 1 werden die Drähte 3, 4 durch die Durchführungsvorrichtung 7 als Wicklungen auf den Körper 1 aufgebracht. Hierbei führt das über den Antrieb 8 bewegte Rohr 9 den Drahtführungskopf 10 und damit die beiden Drahtführungsdüsen 11, 12 in bekannter Weise zunächst linear in Pfeilrichtung nach links, bis die beiden Drähte 3, 4 durch das Innere des Körpers 1 geführt sind. Gegen Ende dieser nach links gerichteten Linearbewegung dreht der Antrieb 8 das Rohr 9 und damit die Drahtführungsdüsen 11, 12 beispielsweise im Uhrzeigersinn um die Rohrachse, beendet die nach links gerichtete Linearbewegung und kehrt sodann die Richtung der Linearbewegung des Rohres 9 um. Bei Beginn der Bewegungsumkehr des Rohres 9 wird die Drehbewegung beendet und das Rohr 9 und damit die Drahtführungsdüsen 11, 12 in einer nach rechts gerichteten Linearbewegung durch den Körper 1 geführt. Gegen Ende dieser Linearbewegung dreht der Antrieb 8 das Rohr 9 und damit die Drahtführungsdüsen im Gegenuhrzeigersinn um die Rohrachse, beendet die nach rechts gerichtete Linearbewegung und kehrt sodann die Richtung der Linearbewegung des Rohres 9 und der Drahtführungsdüsen 11, 12 um. Nach Beendigung der Drehbewegung im Gegenuhrzeigersinn ist sodann von jedem der beiden Drähte 3, 4 je eine Windung der herzustellenden beiden Wicklungen auf dem Körper 1 aufgebracht.

Im Zufuhrweg der Drähte 3, 4 zwischen der Vorratsspule 5, 6 und der Halterung 2 ist eine Drahtbremse 14 bzw. 15 angeordnet, welche die zugeführten Drähte 3, 4 jeweils mit konstanter Reibungskraft beaufschlagt. Diese Drahtbremse ist beweglich angeordnet und führt beim Bewickeln des Körpers 1 eine synchron zur Bewegung der Drahtführungsvorrichtung 7 erfolgende Bewegung aus. Dies wird in besonders einfacher Weise dadurch erreicht, dass die Drahtbremse 14 bzw. 15 auf dem Rohr 9 der Drahtführungvorrichtung 7 befestigt ist und eine die beiden Drähte 3, 4 vorwiegend in Richtung der Rohrachse leitende Führung aufweist. Bedingt durch die Synchronbewegung kann die beim Bewickeln auftretende Zugspannung kleingehalten werden und können sich trotz kleiner Zugspannung spannungslose Zustände zwischen den Vorratsspulen 5, 6 und der Drahtführungsvorrichtung 7 nicht bis zu den aufzubringenden Wicklungen des Körpers 1 auswirken. Die Wicklungen werden daher selbst bei sehr hohen Wickelgeschwindigkeiten kompakt ausgebildet und sitzen fest auf dem Körper 1 auf. Unerwünschte Schlaufenbildungen und Drahtrisse treten daher selbst bei Verwendung inhomogen ausgebildeter Drähte 3, 4 mit eklatanten mechanischen Schwachstellen kaum mehr auf. Dies vor allem auch deswegen, da zugspannungserhöhende Umkehrstellen in der Drahtführung nahezu entfallen.

Die Drahtbremse lässt sich besonders einfach auf bereits gefertigte Statorwickelmaschinen aufmontieren, wenn sie an dem Ende des Rohres 9 aufgebracht ist, an dem die Drähte 3, 4 durch eine Drahteintrittsöffnung in das Rohr geführt werden. Besonders kurze Drahtlängen zwischen den Wicklungen des Körpers 1 und der Drahtbremse und damit eine besonders kurze Dehnung der Drähte 3, 4 infolge unvermeidlicher oszillierender Zugspannungen beim Wickeln werden dann erreicht, wenn die in der Fig. 1 strichliert dargestellte und mit dem Bezugszeichen 15 versehene Drahtbremse am drahtaustrittsseitigen Ende des Rohres 9 im Bereich des Drahtführungskopfes 10 befestigt wird. Sind zwei entsprechend den Drahtbremsen 14 und 15 angeordnete Drahtbremsen vorgesehen, so können die Drähte 3, 4 besonders feinstufig abgebremst werden und können so selbst Drähte mit herstellungsbedingten grossen Fertigungstoleranzen noch mit hoher Wickelgeschwindigkeit verarbeitet werden.

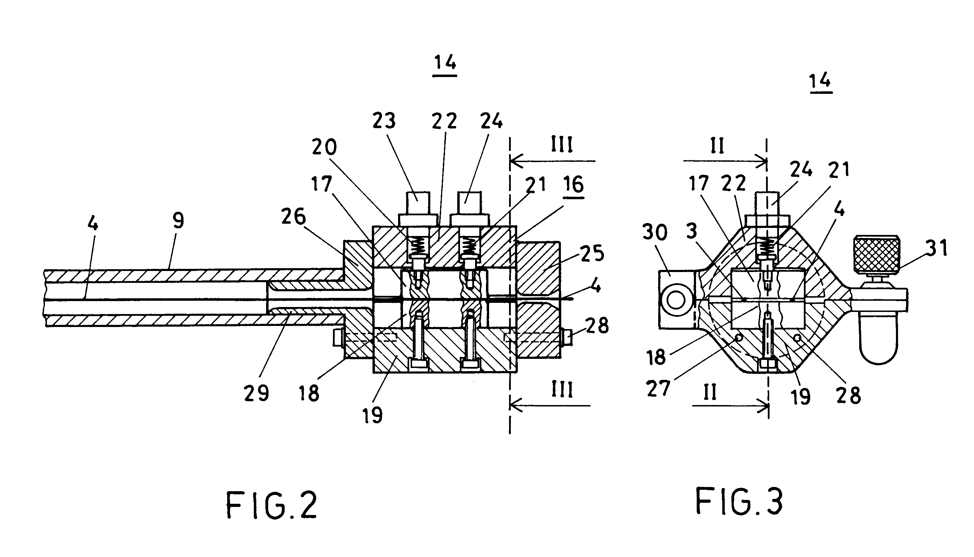

Wie aus den Figuren 2 und 3 ersichtlich ist, kann die Drahtbremse 14 beispielsweise zwei in einem Gehäuse 16 angeordnete und jeweils als Platte ausgebildete Bremsbacken 17, 18 aufweisen, zwischen deren einander gegenüberstehenden ebenen Stirnflächen die beiden Drähte 3, 4 mit Abstand zueinander geführt sind. Eine der beiden Bremsbacken, nämlich die Bremsbacke 18, ist mittels nicht bezeichneter Schrauben in einer Gehäusehälfte 19 des Gehäuses 16 befestigt, wohingegen die andere Bremsbacke 17 gegen die Kraft zweier Federn 20, 21 radial verschieblich in einer Ausnehmung der anderen Gehäusehälfte 22 geführt ist. Die beiden Federn 20, 21 sind untergebracht in radial nach aussen erstreckten Bohrungen der Gehäusehälfte 22, welche in Richtung der Achse des Rohres 9 versetzt angeordnet sind. Hierdurch wird eine besonders gleichmässig wirkende Auflage der Bremsbacke 17 auf der Bremsbacke 18 und damit eine besonders gleichmässig wirkende Bremskraft auf die Drähte 3, 4 ausgeübt. Die Höhe der Bremskraft und deren Wirkung auf die Bremsbacken 17, 18 kann durch Einstellschrauben 23, 24 verändert werden. Die Bremsbacken 17, 18 sind zumindest an ihren einander gegenüberstehenden, auf die Drähte 3, 4 wirkenden Stirnflächen von einem harten, polierten und abriebfesten Werkstoff, wie etwa Keramik oder gehärtetem Stahl gebildet.

Aus abriebfestem Material bestehen auch die zur Führung der Drähte 3, 4 in der Drahtbremse 14 vorgesehenen Führungsteile 25, 26. Das Führungsteil 25 ist im wesentlichen scheibenförmig ausgebildet und beispielsweise mittels zweier Schrauben 27, 28 auf der Gehäusehälfte 19 befestigt. Es weist zwei im wesentlichen parallel zur Achse des Rohres 9 erstreckte Öffnungen auf, welche als Eintrittsöffnungen der Drähte 3, 4 ins Innere der Drahtbremse 14 dienen. Das Führungsteil 26 ist ebenfalls scheibenförmig ausgebildet, weist aber zusätzlich einen in das Rohr 9 geführten und mit diesem etwa durch Verkleben verbundenen, hohlen Ansatz 29 auf. Durch diesen hohlen Ansatz treten die beiden Drähte 3, 4 aus der Drahtbremse 14 in das Rohr 9 ein. Das Führungsteil 26 ist ebenfalls mittels (nicht bezeichneter) Schrauben mit der Gehäusehälfte 19 verbunden, wodurch die Fixierung der Drahtbremse 14 am Rohr 9 bewirkt wird.

Die Gehäusehälfte 22 ist um ein in Richtung der Achse des Rohres 9 ausgerichtetes Scharnier 30 schwenkbar. Hierdurch lassen sich zum einen die Bremsbacken 17, 18 montieren und warten. Zum anderen wird hierdurch aber auch das Einfädeln der Drähte 3, 4, beispielsweise bei einem Wechsel der Vorratsspulen 5, 6 wesentlich erleichtert. Mittels einer Schnellkupplung 31 kann die schwenkbare Gehäusehälfte 22 rasch befestigt bzw. rasch aufgeschwenkt werden. Eine solche Schnellkupplung kann beispielsweise von einer rasch lösbaren Schraubverbindung mit einer Rändelmutter gebildet sein.

Es müssen nicht notwendigerweise zwei Drähte durch die Drahtbremse geführt sein. Es ist ohne weiteres möglich, dass anstelle zweier Drähte lediglich ein Draht verwendet wird.

**Patentansprüche**

1. Vorrichtung zur Herstellung eines bewickelten Körpers (1), insbesondere eines Stators einer elektrischen Maschine, mit
   - einer Halterung (2) zum Befestigen des Körpers (1),
   - einer oszillierende Linear- und Drehbewegungen ausführenden Drahtführungsvorrichtung (7) zum Bewickeln des Körpers (1) mit mindestens einem Draht (3, 4),
   - einem Antrieb (8) zur Erzeugung der Bewegungen der Drahtführungsvorrichtung (7)
   - mindestens einer Vorratsspule (5, 6) zur Zufuhr des mindestens einen Drahtes (3, 4) und
   - mindestens einer zwischen Spule (5, 6) und Halterung (2) angeordneten Drahtbremse (14, 15) zur Beaufschlagung des zugeführten mindestens einen Drahtes (3, 4) mit konstanter Reibungskraft, dadurch gekennzeichnet, dass die mindestens eine Drahtbremse (14, 15) beweglich angeordnet ist und beim Bewickeln des Körpers (1) eine synchron zur Bewegung der Drahtführungsvorrichtung (7) erfolgende Bewegung ausführt.

2. Vorrichtung nach Anspruch 1, dadurch gekennzeichnet, dass die mindestens eine Drahtbremse (14, 15) an einem geradlinig erstreckten Rohr (9) der Drahtführungsvorrichtung (7) befestigt ist und eine den mindestens einen Draht (3, 4) vorwiegend in Richtung der Rohrachse leitende Führung aufweist.

3. Vorrichtung nach Anspruch 2, dadurch gekennzeichnet, dass die mindestens eine Drahtbremse (14) an der Drahteintrittsöffnung des Rohres (9) angebracht ist.

4. Vorrichtung nach Anspruch 3, dadurch gekennzeichnet, dass der mindestens eine Draht (3, 4) jeweils durch ein die Drahteintrittsöffnung der mindestens einen Drahtbremse (14) und ein die Drahteintrittsöffnung des Rohres (9) bildendes Teil (25, 26) geführt ist.

5. Vorrichtung nach Anspruch 2, dadurch gekennzeichnet, dass die mindestens eine Drahtbremse (15) am drahtaustrittsseitigen Ende des Rohres (9) angebracht ist.

6. Vorrichtung nach Anspruch 5, dadurch gekennzeichnet, dass eine weitere Drahtbremse (14) an der Drahteintrittsöffnung des Rohrs (9) angebracht ist.

7. Vorrichtung nach einem der Ansprüche 1 - 6, dadurch gekennzeichnet, dass der mindestens eine Draht (3, 4) nahezu umlenkungsfrei von der Vorratsspule (5, 6) an die mindestens eine Drahtbremse (14, 15) geführt ist.

8. Vorrichtung nach einem der Ansprüche 2 - 7, dadurch gekennzeichnet, dass die mindestens eine Drahtbremse (14, 15) zwei in einem Gehäuse (16) angeordnete und jeweils als Platte ausgebildete Bremsbacken (17, 18) aufweist, zwischen deren einander gegenüberstehenden Stirnflächen der mindestens eine Draht (3, 4) geführt ist, und von denen mindestens eine (17) gegen die Kraft mindestens einer Feder (20, 21) radial verschieblich im Gehäuse (16) geführt ist.

9. Vorrichtung nach Anspruch 8, dadurch gekennzeichnet, dass mindestens zwei auf die verschieblich geführte Bremsbacke (17) wirkende Federn (20, 21) vorgesehen sind, welche gegeneinander in Richtung der Rohrachse versetzt angeordnet sind.

10. Vorrichtung nach einem der Ansprüche 8 oder 9, dadurch gekennzeichnet, dass das Gehäuse (16) von zwei jeweils eine der beiden Bremsbacken (17, 18) aufnehmenden Gehäusehälften (19, 22) gebildet ist.

11. Vorrichtung nach Anspruch 10, dadurch gekennzeichnet, dass die eine (22) der beiden Gehäusehälften (19, 22) um ein in Drahtführungsrichtung ausgerichtetes Scharnier (30) schwenkbar und mittels einer Schnellkupplung (31) fixierbar ist.

12. Vorrichtung nach einem der Ansprüche 1 - 11, dadurch gekennzeichnet, dass mindestens zwei Drähte durch die mindestens eine Drahtbremse geführt sind.

FIG.1

FIG.3

FIG.2

**Europäisches Patentamt**

# EUROPÄISCHER RECHERCHENBERICHT

Nummer der Anmeldung

**EP 90 11 7729**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 450 357 (E.N.OLSON)<br>* Spalte 3, Zeile 59 - Spalte 4, Zeile 7; Figur 3 *<br>– – – | 1-3,7 | H 02 K 15/08 |
| X | FR-A-1 173 379 (FORGES ET ATELIERS DE CONSTRUCTIONS ELECTRIQUES DE JEUMONT)<br>* Seite 4, Zeilen 17 - 21; Figur 6 *<br>– – – | 1,2 | |
| A | US-A-1 351 230 (P.E.CHAPMAN)<br>* Seite 1, Zeilen 94 - 96; Figur 1 *<br>– – – | 8 | |
| A | DD-A-77 257 (G.KUENZEL)<br>* Spalte 4, Zeilen 13 - 15; Figur 3 *<br>– – – | 8 | |
| A,D | EP-A-0 294 978 (STATOMAT-GLOBE INC.)<br>* Zusammenfassung; Figuren 2, 3 *<br>– – – – – | 1,12 | |

|  |
|---|
| RECHERCHIERTE SACHGEBIETE (Int. Cl.5) |
| H 02 K |

Der vorliegende Recherchenbericht wurde für alle Patentansprüche erstellt

| Recherchenort | Abschlußdatum der Recherche | Prüfer |
|---|---|---|
| Berlin | 08 April 91 | LEOUFFRE M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
---------------------------------------------------------------------
& : Mitglied der gleichen Patentfamilie, übereinstimmendes Dokument